# EUROPEAN PATENT APPLICATION

(11) **EP 4 714 716 A1**
(43) Date of publication of application: **25.03.2026**
(21) Application number: 25203066.3
(22) Date of filing: 18.09.2025
(51) Int. Cl.: B60L 3/00, B60L 58/18, B60L 58/20, B60L 3/04

(54) **PLATFORM AGNOSTIC HYBRID POWER BATTERY SYSTEM**

(30) Priority: 23.09.2024 US 202463697894 P; 12.09.2025 US 202519327545
(71) Applicant: Cummins, Inc., Columbus, Indiana 47201 (US)
(72) Inventor: Desai, Krunal, Columbus, 47201 (US); Sturmer, Paul, Columbus, 47201 (US); Keefer, Collin, Columbus, 47201 (US); Gerhardt, David T., Columbus, 47201 (US)
(74) Representative: Cleveland Scott York

(57) **Abstract**

In an implementation, a system includes a plurality of battery packs (102A, 102B) galvanically isolated from a power source (120). Each battery pack from the plurality of battery packs is galvanically isolated from remaining battery packs from the plurality of battery packs. Each battery pack from the plurality of battery packs includes a battery module (104A, 104B) and a plurality of DC/DC converters (106A, 106B). In some implementations, the power source is a primary power source of a diesel-battery hybrid vehicle. In some implementations, the diesel-battery hybrid vehicle is one of a mining haul truck, a locomotive, or a marine vessel. In some implementations, the power source is a primary power source of a stationary power system. In some implementations, the set of DC/DC converters includes at least one buck converter and at least one boost converter.

## Description

### CROSS-REFERENCE TO RELATED APPLICATIONS

The present application claims the benefit of and priority to 63/697,894, filed September 23, 2024, the disclosure of which is incorporated herein by reference in its entirety.

### BACKGROUND

Some implementations are related to a platform agnostic hybrid power battery system.

In systems where a primary battery system and secondary battery system are electrically coupled to each other, a function of the primary battery system can be affected if the secondary battery system becomes unavailable. Further, in systems where the secondary battery system includes multiple battery packs that are electrically coupled to each other, a fault current or other error at a battery pack can propagate and compound at other battery packs. This can be undesirable if, for example, consistent and low-risk performance of the primary battery system is desirable (e.g., for a diesel-battery hybrid vehicle powered in part by the primary battery system). In addition, some known systems implement controls and/or power conversion (e.g., via DC/DC converters and/or related components) at a system-wide level, which can result in system-level faults, power imbalances or uneven power distribution, and/or issues with power syncing. Accordingly, a need exists for improved platform agnostic hybrid power battery systems.

### SUMMARY

In an implementation, a system includes a set of battery packs galvanically isolated from a power source. Each battery pack from the set of battery packs is galvanically isolated from remaining battery packs from the set of battery packs. Each battery pack from the set of battery packs includes a battery module and a set of DC/DC converters. In some implementations, the power source is a primary power source of a diesel-battery hybrid vehicle. In some implementations, the diesel-battery hybrid vehicle is one of a mining haul truck, a locomotive, or a marine vessel. In some implementations, the power source is a primary power source of a stationary power system. In some implementations, the set of DC/DC converters includes at least one buck converter and at least one boost converter.

In an implementation, a method includes electrically coupling a first battery pack and a second battery pack such that the first battery pack is galvanically isolated from the second battery pack. The first battery pack includes a first battery module and a first set of DC/DC converters. The second battery pack includes a second battery module and a second set of DC/DC converters. The method further includes electrically coupling the first battery pack and the second battery pack to a power source such that the first battery pack is galvanically isolated from the power source and the second battery pack is galvanically isolated from the power source. In some implementations, the power source is a primary power source of a diesel-battery hybrid vehicle. In some implementations, the diesel-battery hybrid vehicle is one of a mining haul truck, a locomotive, or a marine vessel. In some implementations, the power source is a primary power source of a stationary power system. In some implementations, the set of DC/DC converters includes at least one buck converter and at least one boost converter.

### BRIEF DESCRIPTION OF THE DRAWINGS

FIG. 1 illustrates a system schematic block diagram of a hybrid power system that includes a platform agnostic battery system, according to an implementation.
FIG. 2 illustrates a schematic block diagram of multiple battery packs in electrical communication, according to an implementation.
FIG. 3 illustrates a schematic block diagram of multiple battery packs in electrical communication, according to an implementation.
FIG. 4 illustrates a schematic diagram of multiple battery packs in electrical communication, according to an implementation.
FIG. 5 illustrates multiple thermal management systems, each of which is electrically coupled to a corresponding battery pack, according to an implementation.
FIG. 6 illustrates a method of electrically coupling battery packs and a power source in a galvanically isolated manner, according to an implementation.

### DETAILED DESCRIPTION

Some implementations described herein are related to a platform agnostic hybrid power battery system. In some implementations, a platform agnostic hybrid power battery system describes an electrical architecture that enables the coupling of a battery power management system to a separate power source to create a hybrid power system. The system can be platform agnostic by being capable of providing power with characteristics useful for any of a variety of loads, including but not limited to vehicle, mobile, and/or stationary loads. The separate power source can be, for example, a primary or secondary power source. For example, the power source can be a combustion engine (or generator powered by the combustion engine), a fuel cell system (e.g., hydrogen fuel cell system), a solar power system, and/or the like. In some implementations, a platform agnostic hybrid power battery system includes a quantity of battery packs (sometimes referred to herein as "battery strings" or "power strings"), electrical control components (e.g., power converters such as DC/DC buck and/or boost converters, isolation switches, voltage regulators, and/or the like), telemetry components, thermal management components, and software (e.g., control software, instructions, code, etc.). In some implementations, a platform agnostic hybrid power battery system is part of a larger system (e.g., a diesel-battery hybrid vehicle). In some implementations, a platform agnostic hybrid power battery system can be applied to heavy duty and/or industrial machinery applications including but not limited to heavy duty off-highway vehicles like mining haul trucks, locomotives, and/or marine vehicles, and/or the like. In some implementations, a platform agnostic hybrid power battery system can be applied in station (or stationary) power systems.

In some implementations, a platform agnostic hybrid power battery system is galvanically isolated from the combustion engine/fuel cell power source. Additionally or alternatively, in some implementations, each battery pack in a platform agnostic hybrid power battery system is galvanically isolated from the remaining or other battery packs in the platform agnostic hybrid power battery system. This galvanically isolated configuration enables a modular system where battery packs can be added, removed, and/or replaced to/from the platform agnostic hybrid power battery system without undergoing any (or major) hardware and/or software modifications. For example, such a system can provide and/or allow for a unified or standardized bus or connection allowing a modular battery pack to be added or removed from the system. Similarly, the galvanic isolation can allow a battery pack to be shut down and/or isolated from the other battery packs in response to a fault, ground loops, underperformance, overpower state, failure, etc. This galvanically isolated configuration also enables operation of an alternative or hybrid power system without interference from the platform agnostic hybrid power battery system in cases of damage, fault or inoperability to the platform agnostic hybrid power battery system.

Compared to known systems, implementations described herein provide several advantages.

### Galvanic isolation

The platform agnostic hybrid power battery systems described herein provide one or more layers or levels of galvanic isolation. Galvanic isolation can include electrical systems in which a circuit or functional portion of a circuit is electrically and/or physically disconnected from another circuit or another functional portion of the circuit. In such configurations, current flow is prevented along direct conduction paths, but energy and/or information may still be transferred via other coupling modalities (e.g., capacitive, inductive, radiative, optical, acoustic, mechanical, etc.). Galvanic isolation may be used in systems where it is useful for two or more electric circuits to communicate, but the electrical grounds of the circuits may be at different electrical potentials. As described herein, such configurations can be suitable in hybrid power systems where it may be useful for different power sources (e.g., that may have different electrical potentials) to electrically power a single or otherwise the same load. In some implementations, the platform agnostic hybrid power battery system is included in stationary power sources (e.g., transformers, gensets, etc.) to support a single load. In some implementations, a series of the platform agnostic hybrid power battery systems are included in a marine system (e.g., marine vessel, etc.), with the platform agnostic hybrid power battery systems electrically coupled in parallel to support one or more loads of the marine system.

In some implementations, the platform agnostic hybrid power battery system is galvanically isolated from a separate power source (e.g., a primary power source) through a configuration of one or more (e.g., single; paired) DC/DC converters included in each battery pack in the platform agnostic hybrid power battery system. This allows for the primary power source and operating components of the primary power source to still function in case of an error, fault or damage to the platform agnostic hybrid power battery system (or one or more battery packs thereof). Additionally or alternatively, each battery pack in the platform agnostic hybrid power battery system is galvanically isolated from each other battery pack; this means that fault currents, ground loops, or other errors do not propagate and compound within the larger system. This galvanic isolation further provides increased control over the power delivery and demand of a hybrid system.

### Current and Voltage Control

In some implementations, the use of two or paired DC/DC converters included in and/or integrated into each battery pack enables more precise control for power intake and distribution to and from the battery packs. This means that there exists near limitless circumstances where the platform agnostic hybrid power battery system could draw or distribute power during normal operations. In some systems, the power available exceeds the system's ability to distribute power to the battery system during, for example, hard braking down a 10% grade route (or other regenerative or recharging methods). Here, controlling both the current and voltage of the platform agnostic hybrid power battery system enables operation during periods of high voltage instability, which may present during normal operations (e.g., during normal operations of a hybrid vehicle such as a mining haul truck, locomotive, marine vessel, etc.). For example, the ground voltage of the drive system of a hybrid vehicle can vary significantly and render known systems inoperable. The platform agnostic hybrid power battery system described herein, however, is able to adjust and handle these variances and remain operational (e.g., based at least in part on the galvanic isolation, current and/or voltage control capabilities, and/or the like). The platform agnostic hybrid power battery system and the electrical architecture of the battery packs enables the addition or subtraction of battery packs depending on the performance of the larger system for hybridization, which allows for larger powered systems to be addressed like stationary power or maritime applications, and also allows for catering towards smaller power systems to address many different types of electric drive vehicles (e.g., diesel powered haul trucks). Further, in stationary power applications, there may be fewer space restrictions than in mobile applications (e.g., more room for components, flexible orientation of components, etc.). In these stationary power applications, the fewer space restrictions allow for addition of more components, such as battery packs to the platform agnostic hybrid power battery system. In maritime applications, many of the platform agnostic hybrid power battery system may be electrically coupled in parallel and employed to support a large load of the maritime application. In these maritime applications, the platform agnostic hybrid power battery systems coupled in parallel operate as one platform agnostic hybrid power battery system to support the load.

The platform agnostic hybrid power battery system described herein can operate as an independent (or dependent) part of a whole power drive system. Some technologies are directly tied into the drive system and require a greater involvement into the drive system for maintenance and modification. The platform agnostic hybrid power battery system described herein, however, can be switched off without impacting the normal functionality of the drive system. The platform agnostic hybrid power battery system described herein can prevent power from being input into or distributed from the battery packs and/or the battery modules (e.g., groupings of one or more individual battery cells) included in each battery pack.

In some implementations, the platform agnostic hybrid power battery system is configured to allow for safer operations (e.g., through the galvanically isolated configuration) in that fault currents do not propagate amongst battery packs, thereby limiting the amount of hazardous voltage present in the case of a fault; this better protects the downstream components and the operator compared to conventional solutions. For example, while one module of the platform agnostic hybrid power battery system is in a fault state (e.g., experiencing a fault current, etc.), said module may be shut down and/or electrically isolated from the platform agnostic hybrid power battery system, while another module of the platform agnostic hybrid power battery system may output the required power, thereby maintaining power output of the platform agnostic hybrid power battery system.

The electrical configuration of the platform agnostic hybrid power battery system also enables select or target amounts of power intake or distribution. For example, some current technologies may only draw power during certain driving periods because such battery systems are configured to either receive power or provide power, rather than receive and provide power simultaneously. In contrast, the implementations described herein are less limited because they are not constrained to such an all or nothing regenerative power distribution. In some implementations, the platform agnostic hybrid power battery system can be configured to deliver or provide (e.g., to a load) all the power stored by the battery packs (and/or battery modules / cells therein) while additionally providing an amount of power to the battery packs during these same events.

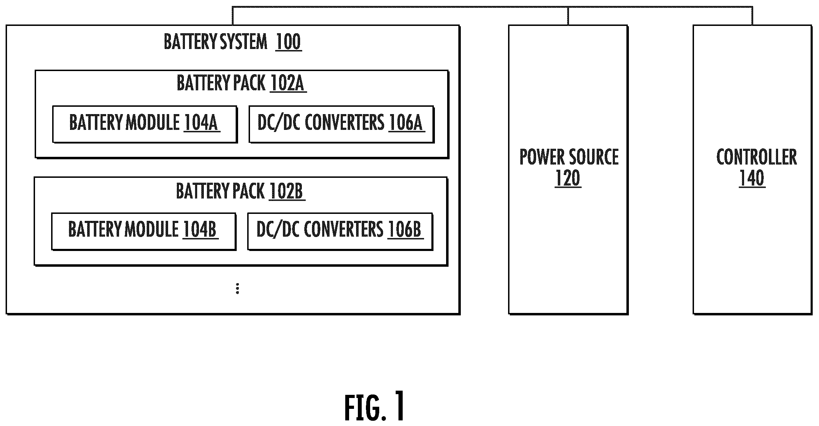

FIG. 1 illustrates a system block diagram that includes a platform agnostic hybrid power battery system, according to an implementation. FIG. 1 shows a platform agnostic hybrid power battery system 100, a power source 120, and a controller 140, one or more of which can be electrically coupled to one another (e.g., via a system bus and/or other/additional components).

The controller 140 can include (or be) any suitable controller or control system. For example, the controller 140 can be, and/or can be a portion of, a controller of the hybrid vehicle. That is to say, a control system of the vehicle can be used as and/or can be modified to function as the controller 140 to control the operation of the platform agnostic hybrid power battery system 100. The controller 140 can include any and/or all suitable components to enable the operation of a control system. In some implementations, the controller 140 can include at least a processor configured to execute instructions or code stored in a memory. Such a processor can be, for example, a hardware based integrated circuit (IC), or any other suitable processing device configured to run and/or execute a set of instructions or code. For example, the processor can be a general-purpose processor, a central processing unit (CPU), an accelerated processing unit (APU), an application specific integrated circuit (ASIC), a field programmable gate array (FPGA), a programmable logic array (PLA), a complex programmable logic device (CPLD), a programmable logic controller (PLC) and/or the like. In some implementations, processor can be configured to perform any of the methods and/or portions of methods discussed herein.

The controller can include any suitable memory or storage medium. For example, the memory can be or include a random-access memory (RAM), a memory buffer, a hard drive, a read-only memory (ROM), an erasable programmable read-only memory (EPROM), and/or the like. In some instances, the memory can store, for example, one or more software programs and/or code that can include instructions to cause the processor to perform one or more processes, functions, and/or the like. In some implementations, the memory can include extendable storage units that can be added and used incrementally. In some implementations, the memory can be a portable memory (e.g., a flash drive, a portable hard disk, and/or the like) that can be operatively coupled to the processor. In some instances, the memory can be remotely operatively coupled with a compute device (not shown). For example, a remote database device can serve as a memory and be operatively coupled to the compute device. The memory can include various components (e.g., machine-readable media) including, for example, a random-access memory (RAM) component, a read only component, and any combinations thereof. In one example, a basic input/output system (BIOS), including basic routines that help to transfer information between elements within a compute system (e.g., the controller 140), such as, for example, during start-up, can be stored in the memory. The memory can further include any number of program modules including, for example, an operating system, one or more application programs, other program modules, program data, and any combinations thereof.

The power source 120 can produce electricity and be any type of power source. In some implementations, the power source 120 is a primary power source of a drive system. For example, the power source 120 can be a primary power source of a diesel-battery hybrid vehicle (e.g., a mining haul truck, a locomotive, a marine vessel, and/or the like). In some implementations, the power source 120 is a combustion engine/fuel cell-based power source.

In some implementations, the platform agnostic hybrid power battery system 100 includes multiple battery packs-battery pack 102A, battery pack 102B, and so on. Each battery pack can include one or more battery modules (e.g., only one battery module, multiple battery modules) and one or more DC/DC converters (e.g., only one DC/DC converter, multiple DC/DC converters). For example, as shown in FIG. 1, the battery pack 102A includes at least one battery module 104A and DC/DC converters 106A, and the battery pack 102B includes at least one battery module 104B and DC/DC converters 106B. In some implementations, the DC/DC converters in each battery pack are parallel to each other and the battery module(s) in that battery pack is/are in series with the DC/DC converters in that battery pack.

In some implementations, each battery module includes any number of battery cells. For example, the battery module 104A includes a first set of battery cells and the battery module 104B includes a second set of battery cells. In some implementations, each DC/DC converter includes at least one buck converter (e.g., only one buck converter or multiple buck converters) and at least one boost converter (e.g., only one boost converter or multiple boost converters). For example, each DC/DC converter may be a buck converter configured to decrease (e.g., step down, etc.) a higher DC voltage to a lower DC voltage. In another example, each DC/DC converter may be a boost converter configured to increase (e.g., boost, step up, etc.) a lower DC voltage to a higher DC voltage. In still another example, each DC/DC converter may be an integrated buck-boost converter configured to either increase or decrease (e.g., step down or step up, etc.) a DC voltage based on a voltage input value and voltage output requirements, such that the buck-boost converter performs the function of both the buck converter and the boost converter in a single converter. In some implementations, the inclusion of at least one buck converter, at least one boost converter, and/or at least one buck-boost converter in each battery module 104A, 104B can allow for enhanced and/or specific current and/or voltage control (e.g., at the battery module level). Accordingly, such a configuration can avoid and/or limit typical issues associated with system-wide DC/DC converters, such as system-wide faults, uneven power distribution/application, power syncing, etc. Moreover, implementations described herein can enable the platform agnostic hybrid power battery system 100 to facilitate start-up and/or stop functions (including cold start functions) associated with the primary power source as well as allowing the primary power source to be maintained within a target operating range (e.g., in the case of a diesel-battery hybrid, maintaining the diesel engine within a target range of revolutions per minute (rpm)).

In some implementations, the platform agnostic hybrid power battery system 100 is galvanically isolated from the power source 120. Additionally or alternatively, in some implementations, each battery pack 102A, 102B in the platform agnostic hybrid power battery system 100 is galvanically isolated from the other battery packs in the platform agnostic hybrid power battery system 100. For example, in some implementations, the battery pack 102A is galvanically isolated from the battery pack 102B. This galvanically isolated configuration enables a modular system where one or more battery packs can be added to, removed from, or replaced in the platform agnostic hybrid power battery system 100 without undergoing any (or major) hardware and/or software modifications.

As described above, galvanic isolation can include electrically separating electrical circuits to eliminate and/or prevent stray currents. Signals can pass between galvanically isolated circuits, but stray currents, such as differences in ground potential or currents induced by alternating current (AC) power, are blocked because no direct conduction path is formed.

FIG. 1 illustrates one example, but variations can exist in other implementations. For example, rather than the controller 140 being operatively coupled to both the battery pack 102A and the battery pack 102B, in some implementations, each battery pack can include its own controller. Said differently, the battery pack 102A can include a controller operatively coupled to the battery module 104A and/or the DC/DC converters 106A, the battery pack 102B can include its own controller operatively coupled to the battery module 104B and/or the DC/DC converters 106B, and so forth. As another example, in some implementations, the platform agnostic hybrid power battery system 100, the power source 120, and the controller 140 can be located across multiple devices and able to communicate / transmit information to each other via a wired or wireless network.

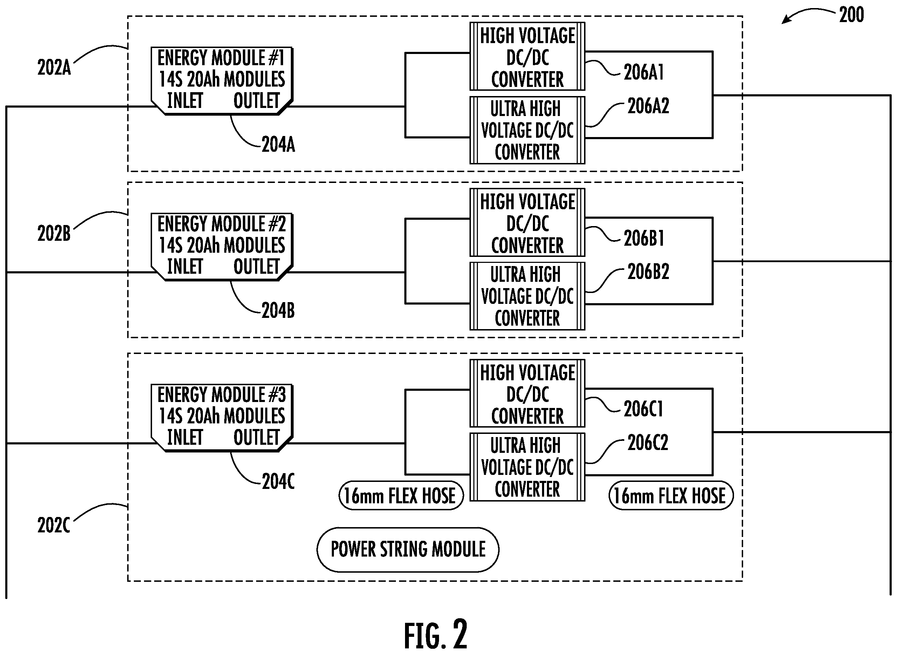

FIG. 2 illustrates a schematic block diagram of at least a portion of a battery system 200 showing multiple battery packs (sometimes referred to herein as "power string modules" or "power strings"), according to an implementation. As shown in FIG. 2, the battery system 200 includes at least battery packs 202A, 202B, and 202C. Each of the battery packs 202A, 202B, 202C include a battery module and two DC/DC converters. The battery pack 202A includes at least one battery module 204A and two DC/DC converters 106A1 and 106A2, the battery pack 202B includes at least one battery module 204B and two DC/DC converters 106B1 and 106B2, and the battery pack 202C includes at least one battery module 204C and two DC/DC converters 106C1 and 106C2. The battery modules 204A, 204B, 204C can be any type of battery modules. In some implementations, each battery pack 202A, 202B, 202C can include, for example, 14 (or fewer or greater) battery modules electrically connected in series (e.g., each battery module including any suitable number of battery cells). In some implementations, each battery pack can be a 20 amp-hour battery pack. In some implementations, the battery modules 204A, 204B, 204C are the same type of battery (e.g., same make and/or model). In some implementations, the battery modules 204A, 204B, 204C are not the same type of battery (e.g., at least one battery module is a different make or model than at least one other battery module).

The DC/DC converters 206A1, 206A2, 206B1, 206B2, 206C1, and 206C2 can be any type of DC/DC converter, such as a high voltage (HV)-HV reversible buck-boost converter. In some implementations, the DC/DC converters 206A1, 206A2, 206B1, 206B2, 206C1, and 206C2 are each the same type (e.g., same make and/or model). In some implementations, the DC/DC converters 206A1, 206A2, 206B1, 206B2, 206C1, and 206C2 are not the same type. For example, the DC/DC converters 206A1, 206B1, and 206C1 can each be a first type of DC/DC converter (e.g., a first make and/or model) and DC/DC converters 206A2, 206B2, 206C2 can each be a second type of DC/DC converter. Other arrangements, configurations, and/or combinations are also contemplated.

The battery packs 202A, 202B, 202C can each be galvanically isolated from one another. Additionally or alternatively, the battery packs 202A, 202B, 202C can be electrically coupled to a power source (not shown) such that the battery packs 202A, 202B, 202C are galvanically isolated from the power source.

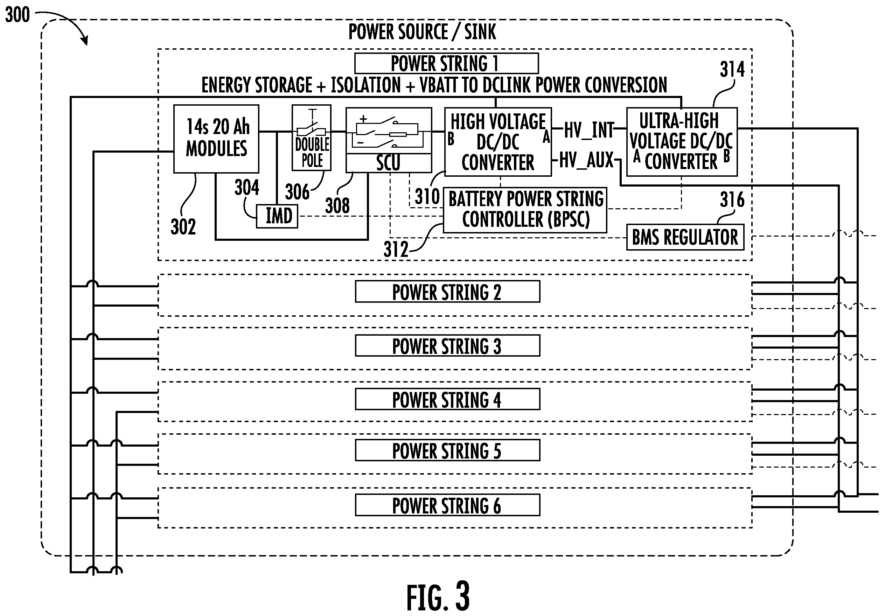

FIG. 3 illustrates a schematic block diagram of at least a portion of a battery system 300 including multiple battery packs, according to an implementation. For example, FIG. 3 illustrates six battery packs-power string 1, power string 2, power string 3, power string 4, power string 5, and power string 6. Power string 1, power string 2, power string 3, power string 4, power string 5, and power string 6 can be galvanically isolated from each other and a power source electrically connected to each of the six battery packs (also referred to as "power strings").

Power string 1 includes at least one battery module 302; a double pole circuit breaker 306; an intermodulation distortion (IMD) circuit 304; a switch bay control and protection unit 308; DC/DC converters 310 and 314; a battery power string controller (BPSC) 312; and a battery management system (BMS) regulator 316. The DC/DC converter 310 can be connected to the DC/DC converter 314 via a high voltage internal (HV_INT) line. The DC/DC converter 314 can also have a high voltage auxiliary (HV_AUX) line. Power string 2, power string 3, power string 4, power string 5, and power string 6 can each have a similar architecture / electrical layout as power string 1 and are therefore not described in further detail herein. Moreover, while FIG. 3 shows six power strings, in other implementations, a battery system can include any number of power strings (e.g., less than six or more than six), each of which can have a similar architecture / electrical layout as power string 1.

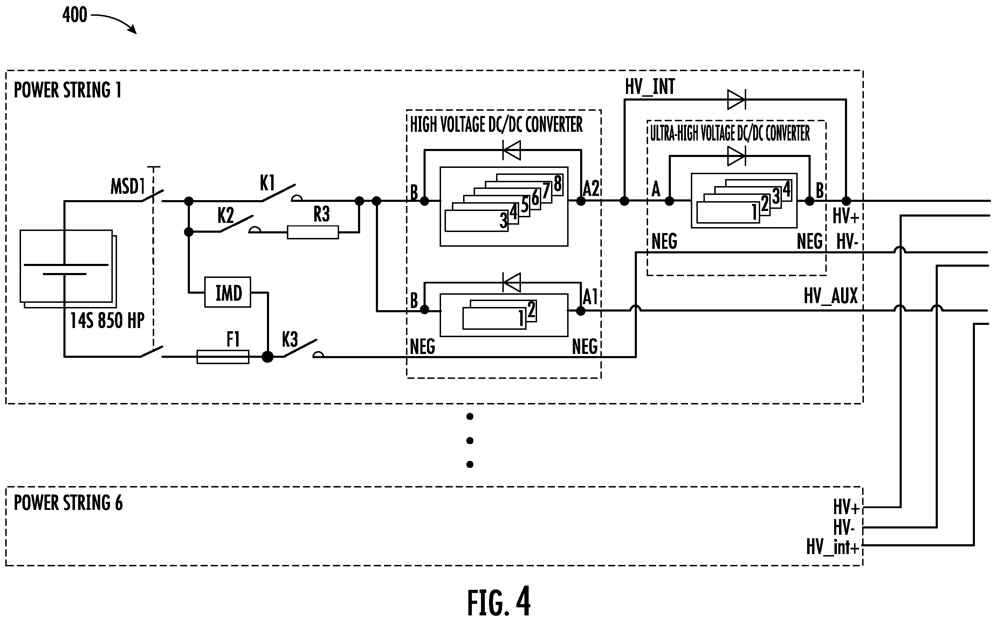

FIG. 4 illustrates a schematic diagram of at least a portion of a battery system 400 including multiple battery packs (also referred to as "power strings"), according to an implementation. As shown in FIG. 4, power string 1 includes at least one battery module. For example, the battery module can be any suitable battery module. The battery module (labelled "14S 850HP" in FIG. 4) can be connected to a first DC/DC converter (labelled "DCHV-MP" in FIG. 4). Between the battery module and first DC/DC converter can include various electronic components, such as an IMD, fuse(s) (e.g., F1), switch(es) (e.g., K1, K2, K3), master service disconnect(s) (e.g., MSD1), resistor(s) (e.g., R3), and/or the like. The first DC/DC converter can also be electrically connected to a second DC/DC converter (labelled "DCUHV-MP" in FIG. 1). Power string 1 can output three signals: a positive high voltage signal (HV+); a negative high voltage signal (HV-); and a high voltage auxiliary signal (HV_AUX). The power strings 2-6 can have a similar or identical electric architecture/layout as power string 1 and therefore are not described in further detail herein. Moreover, while FIG. 4 shows six power strings, in other implementations, a battery system can include any number of power strings (e.g., less than six or more than six), each of which can have a similar architecture / electrical layout as power string 1.

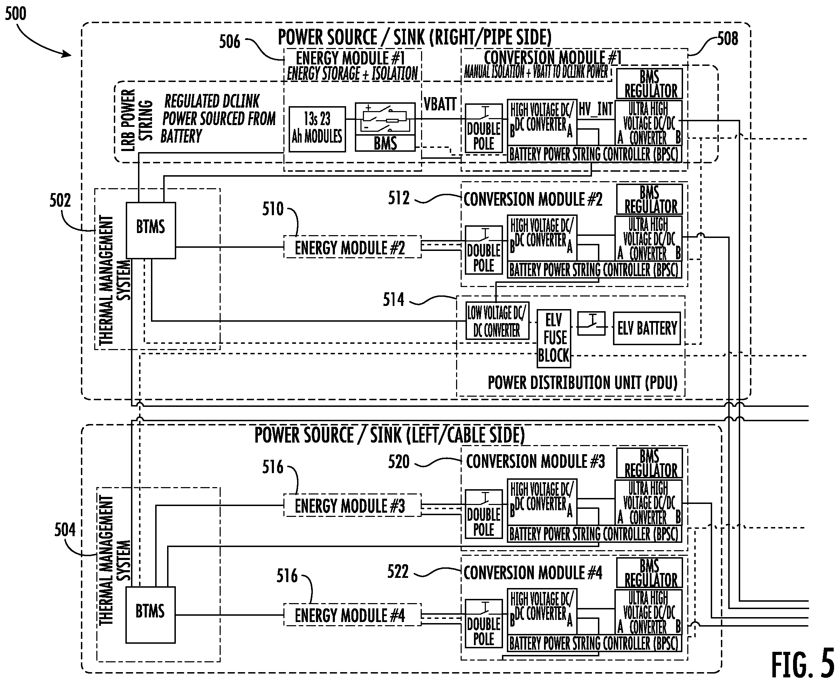

FIG. 5 illustrates a battery system 500 having one or more thermal management systems electrically coupled to multiple battery packs, according to an implementation. In some implementations, the battery system 500 can be included and/or implemented in, for example, locomotives. In other implementations, the battery system 500 can be included and/or implemented in any suitable diesel-battery hybrid vehicle such as off-highway vehicles (e.g., haul trucks or other mining equipment, marine vessels, etc.). Some marine vessels may include multiple battery systems 500 electrically coupled in parallel and operating as one to support one or more loads of the marine vessel. An energy module 506 shown in FIG. 5 can include a battery pack and battery management system (BMS). High voltage power can transfer between the energy module 506 and a conversion module 508. The conversion module 508 can include a double pole circuit breaker, BMS regulator, two DC/DC converters, and a battery power string controller (BPSC).

The thermal management system 502 can include a battery thermal management system (BTMS). High voltage power can transfer between the conversion module 508 and the thermal management system 502. Extra low voltage (ELV) power can transfer between the thermal management system 502 and a power distribution unit (PDU) 514. The PDU 514 can include a DC/DC converter, ELV fuse block, switch, and ELV battery. High voltage power can transfer between (1) the energy module 510 and the conversion module 512, and (2) the PDU 514 and the conversion module 512. The conversion modules 512, 520, and 522 can have the same electronic layout / architecture as conversion module 508 and therefore are not described in further detail.

As shown, the thermal management system 504 can also include a BTMS. High voltage power can transfer between the conversion module 520 and the thermal management system 504. High voltage power can also transfer between the energy module 518 and the conversion module 522.

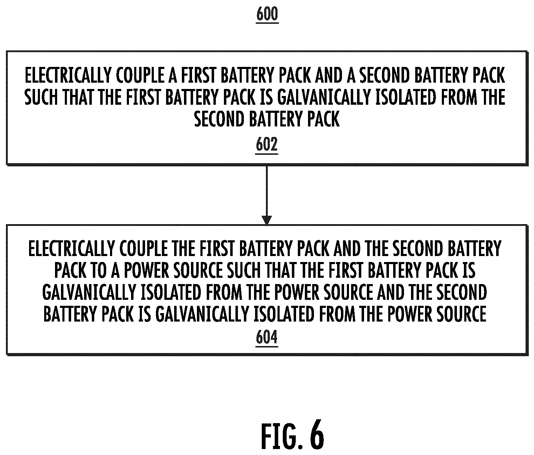

FIG. 6 illustrates a method 600 for electrically coupling battery packs and a power source in a galvanically isolated manner, according to an implementation. At 602, a first battery pack (e.g., the battery pack 102A) and a second battery pack (e.g., the battery pack 102B) are electrically coupled such that the first battery pack is galvanically isolated from the second battery pack. The first battery pack includes a first battery module (e.g., the battery module 104A) and a first set of DC/DC converters (e.g., the DC/DC converters 106A). The second battery pack includes a second battery module (e.g., the battery module 104B) and a second set of DC/DC converters (e.g., the DC/DC converters 106B).

At 604, the first battery pack and the second battery pack are electrically coupled to a power source (e.g., the power source 120) such that the first battery pack is galvanically isolated from the power source and the second battery pack is galvanically isolated from the power source. In some implementations, the DC/DC converters of each battery pack are operable in galvanically isolating that battery pack from the other battery packs. In some implementations of method 600, the power source is a primary power source of a diesel-battery hybrid vehicle (e.g., a mining haul truck, a locomotive, or a marine vessel). In some implementations of method 600, the set of DC/DC converters includes at least one buck converter and at least one boost converter. In some implementations, the DC/DC converters include at least one buck-boost converter.

It is to be noted that any one or more of the aspects and implementations described herein can be conveniently implemented using one or more machines (e.g., one or more compute devices that are utilized as a user compute device for an electronic document, one or more server devices, such as a document server, etc.) programmed according to the teachings of the present specification. Aspects and implementations discussed above employing software and/or software modules can also include appropriate hardware for assisting in the implementation of the machine executable instructions of the software and/or software module.

Such software can be a computer program product that employs a machine-readable storage medium. A machine-readable storage medium can be any medium that is capable of storing and/or encoding a sequence of instructions for execution by a machine (e.g., a compute device) and that causes the machine to perform any one of the methodologies and/or implementations described herein. Examples of a machine-readable storage medium include, but are not limited to, a magnetic disk, an optical disc (e.g., CD, CD-R, DVD, DVD-R, etc.), a magneto-optical disk, a read-only memory "ROM" device, a random-access memory "RAM" device, a magnetic card, an optical card, a solid-state memory device, an EPROM, an EEPROM, and any combinations thereof. A machine-readable medium, as used herein, is intended to include a single medium as well as a collection of physically separate media, such as, for example, a collection of compact discs or one or more hard disk drives in combination with a computer memory. As used herein, a machine-readable storage medium does not include transitory forms of signal transmission.

Such software can also include information (e.g., data) carried as a data signal on a data carrier, such as a carrier wave. For example, machine-executable information can be included as a data-carrying signal embodied in a data carrier in which the signal encodes a sequence of instruction, or portion thereof, for execution by a machine (e.g., a compute device) and any related information (e.g., data structures and data) that causes the machine to perform any one of the methodologies and/or implementations described herein.

Examples of a compute device include, but are not limited to, a computer workstation, a terminal computer, a server computer, a handheld device (e.g., a tablet computer, a smartphone, etc.), a web appliance, a network router, a network switch, a network bridge, any machine capable of executing a sequence of instructions that specify an action to be taken by that machine, and any combinations thereof. In one example, a compute device can include and/or be included in a kiosk.

All combinations of the foregoing concepts and additional concepts discussed herein (provided such concepts are not mutually inconsistent) are contemplated as being part of the subject matter disclosed herein. The terminology explicitly employed herein that also can appear in any disclosure incorporated by reference should be accorded a meaning most consistent with the particular concepts disclosed herein.

The drawings are primarily for illustrative purposes, and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The entirety of this application (including the Cover Page, Title, Headings, Background, Summary, Brief Description of the Drawings, Detailed Description, Implementations, Abstract, Figures, Appendices, and otherwise) shows, by way of illustration, various implementations in which the implementations can be practiced. The advantages and features of the application are of a representative sample of implementations only, and are not exhaustive and/or exclusive. Rather, they are presented to assist in understanding and teach the implementations, and are not representative of all implementations. As such, certain aspects of the disclosure have not been discussed herein. That alternate implementations cannot have been presented for a specific portion of the innovations or that further undescribed alternate implementations can be available for a portion is not to be considered to exclude such alternate implementations from the scope of the disclosure. It will be appreciated that many of those undescribed implementations incorporate the same principles of the innovations and others are equivalent. Thus, it is to be understood that other implementations can be utilized, and functional, logical, operational, organizational, structural and/or topological modifications can be made without departing from the scope and/or spirit of the disclosure. As such, all examples and/or implementations are deemed to be non-limiting throughout this disclosure.

Also, no inference should be drawn regarding those implementations discussed herein relative to those not discussed herein other than it is as such for purposes of reducing space and repetition. For example, it is to be understood that the logical and/or topological structure of any combination of any program components (a component collection), other components and/or any present feature sets as described in the figures and/or throughout are not limited to a fixed operating order and/or arrangement, but rather, any disclosed order is exemplary and all equivalents, regardless of order, are contemplated by the disclosure.

The terms "instructions" and "code" should be interpreted broadly to include any type of computer-readable statement(s). For example, the terms "instructions" and "code" can refer to one or more programs, routines, sub-routines, functions, procedures, etc. "Instructions" and "code" can comprise a single computer-readable statement or many computer-readable statements.

Some implementations described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) can be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other implementations described herein relate to a computer program product, which can include, for example, the instructions and/or computer code discussed herein.

Some implementations and/or methods described herein can be performed by software (executed on hardware), hardware, or a combination thereof. Hardware modules can include, for example, a general-purpose processor, a field programmable gate array (FPGA), and/or an application specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, implementations can be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

Various concepts can be embodied as one or more methods, of which at least one example has been provided. The acts performed as part of the method can be ordered in any suitable way. Accordingly, implementations can be constructed in which acts are performed in an order different than illustrated, which can include performing some acts simultaneously, even though shown as sequential acts in illustrative implementations. Put differently, it is to be understood that such features can not necessarily be limited to a particular order of execution, but rather, any number of threads, processes, services, servers, and/or the like that can execute serially, asynchronously, concurrently, in parallel, simultaneously, synchronously, and/or the like in a manner consistent with the disclosure. As such, some of these features can be mutually contradictory, in that they cannot be simultaneously present in a single implementation. Similarly, some features are applicable to one aspect of the innovations, and inapplicable to others.

In addition, the disclosure can include other innovations not presently described. Applicant reserves all rights in such innovations, including the right to implementation such innovations, file additional applications, continuations, continuations-in-part, divisionals, and/or the like thereof. As such, it should be understood that advantages, implementations, examples, functional, features, logical, operational, organizational, structural, topological, and/or other aspects of the disclosure are not to be considered limitations on the disclosure as defined by the implementations or limitations on equivalents to the implementations. Depending on the particular performance targets and/or characteristics of an individual and/or enterprise user, database configuration and/or relational model, data type, data transmission and/or network framework, syntax structure, and/or the like, various implementations of the technology disclosed herein can be implemented in a manner that enables a great deal of flexibility and customization as described herein.

All definitions, as defined and used herein, should be understood to control over dictionary definitions, definitions in documents incorporated by reference, and/or ordinary meanings of the defined terms.

The indefinite articles "a" and "an," as used herein in the specification and in the implementations, unless clearly indicated to the contrary, should be understood to mean "at least one."

The phrase "and/or," as used herein in the specification and in the implementations, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B," when used in conjunction with open-ended language such as "comprising" can refer, in one implementation, to "A" only (optionally including elements other than "B"); in another implementation, to "B" only (optionally including elements other than "A"); in yet another implementation, to both "A" and "B" (optionally including other elements); etc.

As used herein in the specification and in the implementations, "or" should be understood to have the same meaning as "and/or" as defined above. For example, when separating items in a list, "or" or "and/or" shall be interpreted as being inclusive (i.e., the inclusion of at least one, but also including more than one) of a number or list of elements, and, optionally, additional unlisted items. Only terms clearly indicated to the contrary, such as "only one of" or "exactly one of," or, when used in the implementations, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the implementations, shall have its ordinary meaning as used in the field of patent law.

As used herein in the specification and in the implementations, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one implementation, to at least one, optionally including more than one, A, with no B present (and optionally including elements other than B); in another implementation, to at least one, optionally including more than one, B, with no A present (and optionally including elements other than A); in yet another implementation, to at least one, optionally including more than one, A, and at least one, optionally including more than one, B (and optionally including other elements); etc.

## Claims

1. A system, comprising:
a plurality of battery packs (102A, 102B) galvanically isolated from a power source (120), each battery pack from the plurality of battery packs galvanically isolated from remaining battery packs from the plurality of battery packs, each battery pack from the plurality of battery packs including at least one battery module (104A, 104B) and at least one direct current to direct current (DC/DC) converter (106A, 106B), wherein each of the plurality of battery packs are:
galvanically isolated upstream of a connection point;
electrically coupled to the remaining battery packs from the plurality of battery packs at the connection point; and
configured to direct power onto a common bus downstream of the connection point.

2. The system of claim 1, wherein the power source (120) is a primary power source of a diesel-battery hybrid vehicle, and wherein the diesel-battery hybrid vehicle is optionally one of a mining haul truck, a locomotive, or a marine vessel.

3. The system of claim 1, wherein the power source (120) is a primary power source of a stationary power system.

4. The system of any of the proceeding claims, wherein the at least one DC/DC converter (106A, 106B) includes one or more of a buck converter, a boost converter, or a buck-boost converter.

5. The system of any of the proceeding claims, wherein each battery pack (102A, 102B) from the plurality of battery packs is modular, such that each battery pack is selectively removable from the system and replaceable by another battery pack from the plurality of battery packs.

6. The system of any of the proceeding claims, configured to selectively shut down a respective battery pack from the plurality of battery packs in response to the respective battery pack experiencing a fault, and optionally configured to operate one or more remaining battery packs from the plurality of battery packs to maintain a power output of the system responsive to shutting down the respective battery pack.

7. The system of any of the proceeding claims, wherein each battery pack from the plurality of battery packs includes a controller operatively coupled to at least one of the at least one battery module or the at least one DC/DC converter.

8. A method, comprising:
electrically coupling a first battery pack (102A) and a second battery pack (102B) such that the first battery pack is galvanically isolated from the second battery pack, the first battery pack including a first battery module (104A) and at least one first DC/DC converter (106A), the second battery pack including a second battery module (104B) and at least one second DC/DC converter (106B);
electrically coupling the first battery pack and the second battery pack to a power source (120) such that the first battery pack is galvanically isolated from the power source and the second battery pack is galvanically isolated from the power source; and
operating at least one of the first battery pack or the second battery pack to direct power onto a common bus downstream of a connection point.

9. The method of claim 8, wherein the power source (120) is a primary power source of a diesel-battery hybrid vehicle, and wherein the diesel-battery hybrid vehicle is optionally one of a mining haul truck, a locomotive, or a marine vessel.

10. The method of claim 8, wherein the power source (120) is a primary power source of a stationary power system.

11. The method of any of claims 8-10, wherein the at least one first DC/DC converter (106A) includes at least one of a buck converter, a boost converter, or a buck-boost converter; and
the at least one second DC/DC converter (106B) includes at least one of a buck converter, a boost converter, or a buck-boost converter.

12. The method of any of claims 8-11, wherein the first battery pack (102A) and the second battery pack (102B) are galvanically isolated upstream of the connection point, electrically coupled at the connection point, and configured to direct power onto the common bus downstream of the connection point.

13. The method of any of claims 8-12, further comprising:
detecting a fault state of the first battery pack; and
responsive to detecting the fault state of the first battery pack, shutting down the first battery pack and operating the second battery pack to direct power onto the common bus downstream of the connection point.

14. An apparatus, comprising:
at least one platform agnostic hybrid battery power system, comprising:
a plurality of battery packs (102A, 102B) galvanically isolated from a power source (120), each battery pack from the plurality of battery packs galvanically isolated from remaining battery packs from the plurality of battery packs upstream of a connection point, each battery pack from the plurality of battery packs including at least one battery module (104A, 104B), at least one DC/DC converter (106A, 106B), and at least one controller, wherein:
the at least one DC/DC converter is at least one of a buck converter, a boost converter, or a buck-boost converter; and
the plurality of battery packs are configured to direct power onto a common bus downstream of the connection point.

15. The apparatus of claim 14, wherein:
the power source is a primary power source of a diesel-battery hybrid marine vessel, the apparatus further comprising a plurality of the platform agnostic hybrid battery power system, each platform agnostic hybrid battery power system galvanically isolated from remaining platform agnostic hybrid battery power systems from the plurality of platform agnostic hybrid battery power systems, wherein the plurality of platform agnostic hybrid battery power systems are electrically coupled in parallel; and/or
each battery pack from the plurality of battery packs is modular, such that each battery pack is selectively removable from the system and replaceable by another battery pack from the plurality of battery packs; and/or
the apparatus is configured to selectively shut down a respective battery pack from the plurality of battery packs in response to the respective battery pack experiencing a fault, and to operate the remaining battery packs from the plurality of battery packs to maintain a power output of the apparatus.
